# EUROPÄISCHE PATENTSCHRIFT

(11) **EP 0 961 744 B1**
(45) Veröffentlichungstag und Bekanntmachung des Hinweises auf die Patenterteilung: **23.03.2005**
(21) Anmeldenummer: 96915976.3
(22) Anmeldetag: 06.06.1996
(51) Int. Cl.: B65G 7/02

(54) **VORRICHTUNG ZUR AUFNAHME UND TRANSPORT SCHWERER LASTEN**
DEVICE FOR CONVEYING HEAVY LOADS
DISPOSITIF POUR TRANSPORTER DE LOURDES CHARGES

(30) Priorität: 07.06.1995 DE 19520361
(43) Veröffentlichungstag der Anmeldung: 08.12.1999
(73) Patentinhaber: Meyer-Rieke, Eckhard, 27721 Ritterhude (DE)
(72) Erfinder: MEYER-RIEKE, Eckhard, D-27721 Ritterhude (DE); MÄHLENHOFF, Harald, D-27755 Delmenhorst (DE)
(86) Internationale Anmeldenummer: PCT/DE1996/000997
(87) Internationale Veröffentlichungsnummer: WO 1996/040574

(56) Entgegenhaltungen:
- FR-A- 2 404 581
- US-A- 5 180 134
- NAVY TECHNICAL DISCLOSURE BULLETIN, Bd. 1, Nr. 1, Mai 1976, ARLINTON, US, Seiten 25-28, XP002013714 M.J. WOLFE & W. H. HATCH: "Inflatable load bars"

## Beschreibung

Die Erfindung betrifft eine Vorrichtung zur Aufnahme und zum Transport schwerer Lasten gem. dem Oberbegriff des Anspruchs 1, (NAVY TECHNICAL DISCLOSURE BULLETIN, Bd. 1, Nr. 1, Mai 1976, ARLINGTON, US, Seiten 25-28, XP002013714, M.J. WOLFE & W. H. HATCH: "Inflatable load bars").

Weitere Einzelheiten der Erfindung werden anhand von schematisch dargestellten Ausführungsbeispielen beschrieben. Hierbei zeigt:
- Figur 1: Vorrichtung zur Aufnahme und zum Transport schwerer Lasten
- Figur 2: Anordnung eines nicht druckbeaufschlagten Druckbehälters in der Bucht der Transportpalette
- Figur 3: Anordnung eines druckbeaufschlagten Druckbehälters in der Bucht der Transportpalette

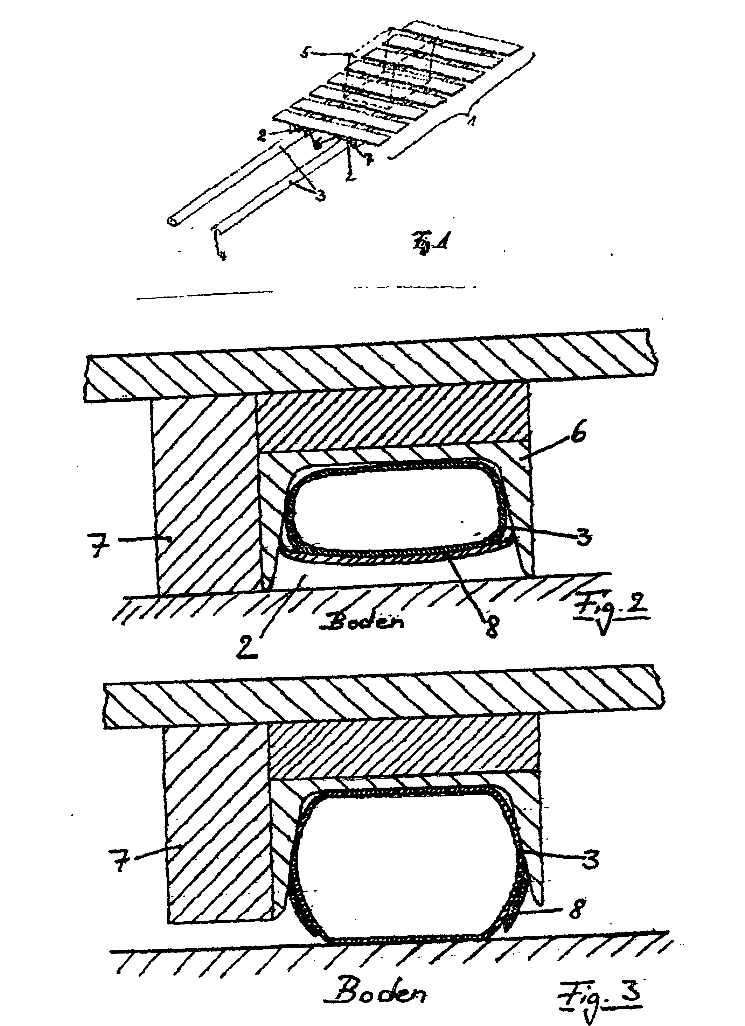

Figur 1 zeigt eine Vorrichtung zur Aufnahme und zum Transport schwerer Lasten. Die Transportpalette 1, bestehend aus Längs- und

Querverstrebungen sowie Kufen 7 zum Stützen der Last 5. Längs der Unterseite der Transportpalette 1 sind zwei Schwerlastprofile als U-Profilausführung 6 befestigt, die die Buchten 2 bilden. In die beiden Buchten 2 sind die Druckschläuche 3 eingelegt.
Die beiden Druckschläuche ragen über das Ende der Transportpalette im druckbeaufschlagten Zustand hinaus. Die Palette samt Last 5 kann nun auf der gleitfähig gestalteten Fläche zwischen U-Profil und Druckschlauch gleiten, da der unter Druck stehende Druckschlauch die Kufen 7 vom Boden abhebt.
An den Enden des Druckschlauches ist die Vorrichtung zum Druckanschluss vorgesehen.

Figur 2 zeigt die Anordnung des nicht druckbeaufschlagten Druckbehälters, hier mittels Druckschlauch 3 realisiert, im U-Profil 6 der Palette. Der Druckschlauch nimmt in diesem Zustand nicht die gesamte Bucht 2 ein. In diesem Teilquerschnitt des Schwerlastprofils sitzt die Kufe 7 auf dem Boden auf. Die mit Schmiermittel gefüllten Kavernen 8 haben in diesem Zustand keine Bodenberührung.

Figur 3 zeigt den druckbeaufschlagten Zustand. Der Druckschlauch 3 ist aufgebläht und hebt die Last an, so dass die Kufe 7 keine Bodenberührung mehr hat.

Die Kavernen 8 sind durch den Druck aufgerissen und haben das Schmiermittel freigegeben, so dass jetzt die Berührungsfläche zwischen Druckschlauch und Boden gleitfähig geworden ist. Die gesamte Last kann nun einfach auf dem gleitfähigen Polster des Druckschlauches unter relativ geringem Kraftaufwand verschoben werden.

### Bezugszeichenliste:

- 1: Lastpalette
- 2: Bucht
- 3: Druckbehälter, Druckschlauch
- 4: Druckanschluss
- 5: Last
- 6: U-Profil
- 7: Kufe
- 8: Gleitmittelreservoir (Kaverne)

## Patentansprüche

1. Vorrichtung zur Aufnahme und zum Transport schwerer Lasten mit einer Fläche zur Auflagerung der Lasten,
**gekennzeichnet durch** eine mit der Fläche ( 1 ) verbundenen Aufnahme ( 6 ) für einen im Volumen veränderbaren Körper ( 3 ) mit einer glatten Oberfläche, bei der **durch** Volumenveränderung des Körpers (3) die Aufnahme (6) anhebbar ist und bei der im Bereich der Aufnahme ( 6 ) ein Gleitmittel in Reservoiren ( 8 ) gelagert ist, welche unter Druckbeaufschlagung das Gleitmittel freigeben, und somit die Oberfläche des Körpers (3) in Richtung zur Aufnahmeeinrichtung und/oder in Richtung zum Boden mit dem Gleitmittel beschichten.

2. Vorrichtung nach Anspruch 1,
**dadurch gekennzeichnet, dass** der Körper ( 3 ) fest mit der Aufnahme (6) verbunden ist und dass an der Unterseite des Körpers ( 3 ) das Gleitmittel angeordnet ist.

3. Vorrichtung nach Anspruch 1,
**dadurch gekennzeichnet, dass** das Gleitmittel zwischen Körper ( 3 ) und Aufnahme ( 6 ) angeordnet ist.

4. Vorrichtung nach einem der vorstehenden Ansprüche, wobei die Fläche im wesentlichen von einer Palette gebildet wird, **dadurch gekennzeichnet, dass** die Aufnahme ( 6 ) unterhalb der Palette ( 1 ) angeordnet ist.

5. Vorrichtung nach Anspruch 4,
**dadurch gekennzeichnet, dass** die Aufnahme ( 6 ) fest mit der Palette ( 1 ) verbunden ist.

6. Vorrichtung nach einem der Ansprüche 4 oder 5,
**dadurch gekennzeichnet, dass** die Aufnahme ( 6 ) in die Unterseite der Palette ( 1 ) eingearbeitet ist

7. Vorrichtung nach einem der vorstehenden Ansprüche,
**dadurch gekennzeichnet, dass** der Körper ( 3 ) fluiddicht ist und zur Volumenvergrößerung mit einem Fluid befüllbar ist.

8. Vorrichtung nach einem der vorstehenden Ansprüche,
**dadurch gekennzeichnet, dass** der Körper ( 3 ) ein Schlauch ist.

9. Vorrichtung nach Anspruch 8, **dadurch gekennzeichnet, dass** der Schlauch ( 3 ) länger als die Aufnahme ( 6 ) ist.

10. Vorrichtung nach Anspruch 8 oder 9 , **dadurch gekennzeichnet, dass** der Schlauch ( 3 ) aus Polyurethan besteht.

## Claims

1. Device for the admission and for the transport of heavy loads marked by a surface to the support of the loads, by one with the surface (1) connected admission (6 for changeable a body (3) with a smooth surface, in the volume, with which by volume change of the body (3) the admission (6) is raisable and with in the range the admission (6) a lubricant in reservoirs (8) is stored, which release the lubricant under application of pressure.

2. Device according to requirement 1, by the fact characterized that the body (3) is firmly with the admission (6) connected and that at the lower surface of the body (3) the lubricant is arranged.

3. Device according to requirement 1, by the fact characterized that the lubricant between body (3) and admission (6) is arranged.

4. Device after one of the managing requirements, whereby the surface is essentially formed by a pallet, by the fact characterized that the admission (6) is arranged underneath the pallet (1).

5. Device according to requirement 4, by the fact characterized that the admission (6) firmly with the pallet (1 is connected.

6. Device after one of the requirements 4 or 5, by the fact characterized that the admission (6) is trained into the lower surface of the pallet (1).

7. Device after one of the managing requirements, by the fact characterized that the body (3) is and is fillable for volume increase with a fluid.

8. Device after one of the managing requirements, by the fact characterized that the body (3) is a hose.

9. Device according to requirement 8, by the fact characterized that the hose (3) is longer than the admission (6).

10. Device according to requirement 8 or 9, by the fact characterized that the hose (3) is made of PU.

## Revendications

1. Dispositif pour la réception et le transport de charges lourdes avec une surface pour déposer les charges, **caractérisé par** un mécanisme de réception (6) relié à cette surface (1) et prévu pour un corps à superficie lisse (3) dont le volume peut varier. En changeant le volume de ce corps (3), le mécanisme de réception (6) peut être soulevé: à cet effet, un lubrifiant est stocké dans des réservoirs (8) à l'intérieur du méchanisme de réception (6) qui est libéré grâce à un système de mise sous pression.

2. Dispositif d'après l'exigence 1 marqué
par le fait que le corps (3) est relié de facon fixe au mécanisme de réception (6) et que le lubrifiant se trouve sous la partie inférieure du corps (3)

3. Dispositif d'après 1 marqué
par le fait que le lubrifiant se trouve entre le corps (3) et la réception (6).

4. Dispositf d'après une des exigences précédentes marqué
par le fait que la surface est en grande partie constituée d'une palette et que la réception (6) se trouve dans le dessous de la palette (1).

5. Dispositif d'après l'exigence 4 marqué
par le fait que la réception (6) est solidement reliée à la palette (1).

6. Dispositif d'après l'exigence 4 ou 5 reconnaissable par le fait que la réception (6) est ancrée dans le dessous de la palette (1).

7. Dispositif d'après une des exigences précédentes marqué
par le fait que le corps (3) est étanche et peut être rempli d'un fluide destiné à l'agrandissement du volume.

8. Dispositif d'après une des exigences précédentes, marqué
par le fait que le corps (3) est un tuyau.

9. dispositif d'après l'exigence 8 marqué
par le fait que le tuyau (3) est plus long que la réception (6).

10. Dispositif d'après l'exigence 8 ou 9 marqué
par le fait que le tuyau (3) est en polyuréthane.
